# EUROPÄISCHE PATENTSCHRIFT

(11) **EP 1 849 652 B1**
(45) Veröffentlichungstag und Bekanntmachung des Hinweises auf die Patenterteilung: **02.12.2009**
(21) Anmeldenummer: 07008647.5
(22) Anmeldetag: 27.04.2007
(51) Int. Cl.: B60P 1/44

(54) **Faltbare Plattform für eine Hubladebühne eines Nutzfahrzeugs**
Folding platform for the cantilever lift of a commercial vehicle
Plate-forme pliante pour une plate-forme de chargement d'un véhicule utilitaire

(30) Priorität: 29.04.2006 DE 102006021259
(43) Veröffentlichungstag der Anmeldung: 31.10.2007
(73) Patentinhaber: Bär, Gerd, 74078 Heilbronn (DE)
(72) Erfinder: Bär, Gerd, 74078 Heilbronn (DE)
(74) Vertreter: Friz, Oliver

(56) Entgegenhaltungen:
- EP-A- 0 314 529
- EP-A- 0 960 771
- EP-A1- 1 093 963
- DE-U1- 29 707 803
- US-A- 5 539 955

## Beschreibung

Die Erfindung betrifft eine Hubladebühne gemäß Oberbegriff des Anspruchs 1.

Faltbare Plattformen werden aus Gründen der Minimierung des Verstauraums während der Fahrstellung der Hubladebühne verwendet. Hierdurch ist es möglich, eine Hubladebühne mit gefalteter Plattform unterhalb des Aufbaus des Nutzfahrzeugs zwischen der letzten Achse und dem Fahrzeugende unterzubringen (sogenannte unterfahrbare Hubladebühnen). Dennoch kann die Plattform im ausgefalteten Zustand, also in der Arbeitsstellung der Hubladebühne, eine Länge von über 2000 mm haben, was für viele Einsatzfälle vorteilhaft ist.

Es gibt aber auch Hubladebühnen mit faltbarer Plattform, die in der Fahrstellung hinter dem Aufbau des Nutzfahrzeugs vertikal angeordnet sind. Hier wird die Plattform vorzugsweise um eine in Längsrichtung des Kraftfahrzeugs liegende Achse gefaltet.

Bekannte faltbare Plattformen (wie z.B DE29707803U) haben in der Regel ein Doppelfaltgelenk zwischen einem feststehenden Plattformteil (Festteil) und einem diesbezüglich faltbaren Plattformteil (Faltteil), wobei bei derartigen Doppelfaltgelenken sowohl am Festteil als auch am Faltteil eine Scharnierwelle vorgesehen ist und die beiderseitigen Scharnierwellen mit mehreren Koppellaschen verbunden sind. Das so gebildete Doppelfaltgelenk hat also zwei Drehpunkte, welche durch die jeweils durchgehende Scharnierwelle gebildet sind.

Über die durchgängigen Wellen und die mehreren Koppellaschen wird ein Zugelement zwischen den faltbaren Plattformteilen gebildet, welches die auf das Faltteil eingeleiteten Vertikalkräfte in horizontale Zugkräfte umsetzt. Unterhalb dieses Faltgelenks werden die resultierenden Druckkräfte über ein Widerlager zwischen Festteil und Faltteil übertragen. Je nach Abstand zwischen der Koppellasche und dem Widerlager (wirksamer Hebel) und je nach Größe des Lastmoments sind die Kräfte im Gelenk mehr oder weniger hoch. Da der tatsächliche Hebelabstand aufgrund der festliegenden Plattformgeometrie nicht beliebig vergrößert werden kann, wird üblicherweise die Anzahl der Koppellaschen den Anforderungen entsprechend erhöht. Dies erhöht aber auch die Herstellkosten, wobei nicht nur die Anzahl der Koppellaschen erhöht werden muss, sondern auch die entsprechenden Scharnierpunkte, also Schnittstellen im Falt- und Festteil, vorgesehen werden müssen.

Faltgelenke der vorstehend beschriebenen Art haben eine Anzahl von Nachteilen: Die Koppellaschen benötigen eine Länge von beispielsweise wenigstens 100 mm, wodurch die Reibung im Gelenk im Zuge des Faltens beträchtlich ist, insbesondere wenn Wasser- und Schmutzbelastung hinzutritt. Auch wenn Edelstahlwellen verwendet werden, werden diese mit der Zeit im Scharnierpunkt infolge Oxidation zunehmend schwergängig, insbesondere dann, wenn die Plattformen längere Zeit im Winter unbenutzt bleiben und zusätzlich Salzstreumittel in die Gelenkbereiche eindringen.

Wenn Koppellaschen aus Stahl verwendet werden, besteht eine hohe Rostproblematik. Es ist bislang nicht möglich, derartige Gelenke aufgrund der auftretenden großen Flächenpressung wirtschaftlich gegen Rost zu schützen. Auch erscheinen hiervon resultierende Rostschlieren insbesondere bei einem Lebensmittelfahrzeug "unappetitlich". Es ist definitiv nicht hinreichend, Koppellaschen und Wellen aus Edelstahl auszubilden, sondern es müsste - um die Rostproblematik zu beherrschen - die gesamte Plattform aus Edelstahl gefertigt werden, was aus wirtschaftlichen Gründen aber nicht möglich ist.

DE 201 19 723 U1 verwendet ein anderes Prinzip, um Plattformbereiche gegeneinander zu klappen. Die Kraftübertragung zwischen den Plattformbereichen beim Klappen oder Verschwenken der gelenkigen Verbindung wird durch Ineinandergreifen eines profilförmig längserstreckten Klauenelements an dem einen Plattformbereich und eines komplementären Aufnahmeprofils an dem anderen Plattformbereich übertragen. Ein zusätzliches herkömmliches Scharnier dient hierbei lediglich als Führungsmittel. Die Ausbildung der Plattformbereiche für die Bildung der gelenkigen Verbindung ist sehr aufwändig und hat sich in der Praxis nicht etabliert.

Der vorliegenden Erfindung liegt die Aufgabe zugrunde, eine faltbare Plattform bzw. eine Hubladebühne mit einer faltbaren Plattform dahingehend zu verbessern, dass die vorstehenden Probleme nicht oder in geringerem Maße auftreten. Es soll also insbesondere bei hohem Verschmutzungspotential und unter Einfluss aggressiver Medien (Salzstreumittel) eine dauerhafte Funktion des Faltgelenks erreicht werden.

Diese Aufgabe wird durch eine Hubladebühne mit den Merkmalen des Anspruchs 1 gelös.

Es wird also auf ein aus Metall bestehendes Doppelscharnier bei der Plattform ganz verzichtet. Stattdessen wird ein Flachmaterial verwendet, welches vorzugsweise einen oder mehrere einstückige und biegsame bandförmige Abschnitte umfasst, die sich entlang der Faltlinie erstrecken. Die auftretenden Zugkräfte zwischen den Plattformteilen werden somit über das Flachmaterial übertragen. Vorzugsweise erstreckt sich ein bandförmiger Abschnitt des Flachmaterials über im Wesentlichen die gesamte Längserstreckung der Faltlinie zwischen den gegeneinander faltbaren Plattformteilen. Auf diese Weise wird eine gleichmäßige Übertragung der Zugkräfte zwischen Festteil und Faltteil erreicht. Die Dicke des Flachmaterials kann verhältnismäßig gering sein. So hat sich beispielsweise eine Dicke von 4 bis 6 mm für die meisten Anwendungen als hinreichend erwiesen. Hierdurch ist es möglich, dass der eingangs genannte Abstand zwischen Faltlinie und Widerlager bei gleicher Plattformstärke sehr viel größer gewählt werden kann als bei Verwendung von metallischen Koppellaschen, die demgegenüber sehr viel dicker bauen. Auf diese Weise ist der wirksame Stützhebel zwischen Flachmaterial und Widerlager bei der erfindungsgemäßen Plattform größer und die auf das Gelenk einwirkenden Kräfte (Zugkräfte in dem Flachmaterial und resultierende Druckkräfte) (bei gleicher Vertikalbelastung des Faltteils) sind geringer als bei bekannten Plattformen entsprechender Plattformgeometrie. Die Materialauswahl für das Flachmaterial erfolgt in Abhängigkeit von der bestimmungsgemäßen Belastbarkeit. Für normale Anwendungen bei faltbaren Plattformen im Bereich bis zu 1000 kg Tragfähigkeit der Hubladebühne erweist sich ein handelsüblicher Gummiflachriemen mit Baumwoll- oder Kunststoffarmierung als geeignet. Für größere Tragfähigkeiten kann ein Zugband mit einer höherfesten Armierung, wie z. B. Kevlar, Aramid oder Kohlefaser, verwendet werden.

Es erweist sich in vorteilhafter Weise als zweckmäßig und praktikabel, wenn das Flachmaterial mit den Plattformteilen durch Klemmung verbunden ist. Die Klemmung kann in vorteilhafter Weise durch Verstemmung, Verschraubung oder Vernietung unterstützt sein.

Im Bereich der Klemmung kann ein bandförmiger Abschnitt des Flachmaterials im Bereich der Verbindung mit einem Plattformteil (oder mit beiden Plattformteilen) wellenförmig oder sickenförmig verlaufend geformt sein. Hierdurch kann die Verbindung zwischen Flachmaterial und Plattformteil für eine noch höhere Zugbeanspruchung ausgelegt werden.

Es erweist sich insoweit auch als vorteilhaft, wenn den bandförmigen Abschnitt des Flachmaterials haltende Bereiche des Plattformteils oder Gelenks mit zur Ebene des Flachmaterials oder in Richtung auf das Flachmaterial vorspringenden Klemmelementen ausgebildet sind. Es können hier insbesondere spitz auslaufende Klemmzähne oder eine sonstige makroskopische Aufrauung der Oberfläche der betreffenden Bereiche vorgesehen werden. Hierdurch kann der bandförmige Abschnitt des Flachmaterials für eine hohe Zugbeanspruchung fixiert werden.

Nach einer weiteren Ausführungsform der Erfindung sind das Flachmaterial haltende Bereiche des einen Plattformteils oder auch beider Plattformteile mit gekrümmter, insbesondere mulden- oder rinnenförmiger Oberfläche, ausgebildet. Das Flachmaterial nimmt dann im fixierten Zustand eine entsprechend gekrümmte Geometrie ein, was wiederum die Beanspruchbarkeit auf Zug erhöht.

Das Flachmaterial kann durch an sich beliebige Haltemittel an dem einen bzw. dem anderen Plattformteil befestigt werden. Nach einer Ausführungsform der Erfindung von besonderer Bedeutung ist das Flachmaterial bzw. ein bandförmiger Abschnitt des Flachmaterials mittels einer Druckleiste gegen das betreffende Plattformteil gehalten. Auch die Druckleiste als Bestandteil des Gelenks kann in vorteilhafter Weise vorspringende Klemmelemente aufweisen. Sie kann beispielsweise durch Schrauben oder Nieten gegen das betreffende Plattformteil unter klemmender Zwischenordnung des Flachmaterials montiert sein.

Als besonders vorteilhaft erweist es sich, dass das Flachmaterial, wie vorausgehend schon erwähnt, eine verhältnismäßig geringe Dicke aufweisen kann. Wenn das Flachmaterial wenigstens nahezu an einer Oberfläche der Plattformteile angeordnet ist, so kann der Abstand zwischen Flachmaterial und Widerlager maximiert und in der Folge die eingeleiteten Druckkräfte minimiert werden. Wenn vorstehend von "wenigstens nahezu an der Oberfläche" die Rede ist, so soll hiermit beispielsweise der Fall erfasst werden, dass das Flachmaterial beispielsweise von Halteelementen und/oder einer Druckleiste überfangen ist, die eine gewisse Dicke aufweisen und ihrerseits mit einer Seite an der Oberfläche der Plattformteile angeordnet sind. Es erweist sich als besonders vorteilhaft, wenn das Flachmaterial zumindest und vorzugsweise in einem der Faltlinie benachbarten Bereich an der Oberfläche der Plattformteile angeordnet sind, da solchenfalls ein maximal möglicher Abstand zwischen Flachmaterial und Widerlager realisierbar ist.

Wenn eine Plattform von parallel zur Faltlinie verlaufenden Plattformprofilen gebildet ist, also beispielsweise von stranggepressten Aluminium-Profilen, insbesondere sogenannten Hohlfachprofilen, so könnte das Flachmaterial prinzipiell an das der Faltlinie nächstliegende Profil zur Ausbildung des Faltgelenks befestigt werden. Es kann sich aber auch bei einer solchen Ausführungsform als vorteilhaft erweisen, wenn ein Plattformteil ein entlang der Faltlinie verlaufendes speziell für die Gelenkfunktion ausgebildetes Gelenkprofil aufweist, gegen welches der bandförmige Abschnitt des Flachmaterials gehalten ist. Bei Plattformen mit senkrecht zur Faltlinie erstreckten plattformbildenden Profilen nimmt dann das Gelenkprofil die Enden der plattformbildenden Profile auf.

Die Verwendung eines solchen zusätzlichen leistenförmigen Gelenkprofils erweist sich auch als vorteilhaft, da dieses dann abweichend von den plattformbildenden Profilen ausgebildet werden kann. Beispielsweise erweist es sich als vorteilhaft, wenn das Gelenkprofil im Querschnitt und in Richtung der Faltlinie betrachtet trapez- oder keilförmig ausgebildet ist, wobei sich die Keil- oder Trapezform in Richtung auf die Faltlinie erweitert. Hierdurch kann ein noch größerer Abstand zwischen dem Flachmaterial, welches in der Arbeitsstellung auf Zug beansprucht wird, und dem darunter liegenden Widerlager, wo die Druckkräfte eingeleitet werden, erreicht werden, wodurch eine bessere Hebelwirkung und damit eine geringere Beanspruchung des Gelenks erreicht werden kann.

Nach einer bevorzugten Ausführungsform der Erfindung greifen die Plattformteile im entfalteten Zustand unterhalb der Faltlinie formschlüssig ineinander, insbesondere nut-und federartig. Hierdurch kann das Faltteil im entfalteten Zustand in einer Richtung senkrecht zur Plattformebene am Festteil gestützt werden, d. h. die vertikale Kraftaufnahme wirkt in vorteilhafter Weise nicht auf das Gelenk ein. In vorteilhafter Weise werden aber über die formschlüssig ineinander greifenden Komponenten der Plattformteile keine Druckkräfte übertragen. Die Druckkräfte werden in vorteilhafter Weise nur über ein bereits erwähntes Widerlager zwischen den Plattformteilen unterhalb der Faltlinie übertragen. Dieses Widerlager ist bei höchstbelasteten Ausführungsformen in vorteilhafter Weise wenigstens 50 mm, insbesondere 50 bis 100 mm, insbesondere 70 bis 90 mm von der Faltlinie der Plattformteile beabstandet.

In Weiterbildung der Erfindung erweist es sich als vorteilhaft, wenn das Widerlager zwischen den Plattformteilen in Richtung der Druckkräfte verstellbar ist. In vorteilhafter Weise kann das Widerlager von einer Schraube oder einem Schraubenkopf gebildet sein. Der Punkt der Kraftübertragung, d.h. der Einleitung von Druckkräften von dem Faltteil auf das Festteil, lässt sich so variieren und nachstellen. Bei Verwendung einer Schraube, die zugleich als Befestigungsmittel für eine andere Komponente dient, können Unterlags- oder Distanzscheiben hierfür verwendet werden.

Es wurde eingangs ausgeführt, dass das Flachmaterial im entfalteten Zustand im Wesentlichen parallel zur Plattformebene erstreckt ist. Bei Faltteilen, die in vorteilhafter Weise eine kurze horizontale Erstreckung senkrecht zur Faltlinie aufweisen - dies ist beispielsweise beim sogenannten Spitzenprofil der Plattform der Fall, welches beispielsweise nur 300 bis 350 mm erstreckt ist -, kann es sich als vorteilhaft erweisen, wenn der Abschnitt des Flachmaterials im entfalteten Zustand des Spitzenprofils der Plattform eine 180°-Anordnung aufweist. Solchenfalls liegt das Flachmaterial in einer Ebene im Wesentlichen senkrecht zur Oberfläche der Plattformteile gegen die Plattformteile an, also gegen eine jeweilige der Faltlinie zugewandte Stirnseite der Plattformteile.

In Weiterbildung dieses Erfindungsgedankens kann es sich als vorteilhaft erweisen, wenn das Flachmaterial über Fixierstücke gegen die jeweilige Stirnseite der Plattformteile geklemmt ist. Im entfalteten Zustand der Plattformteile können diese Fixierstücke für das Flachmaterial des einen Plattformteils mitteilbar oder unmittelbar gegen Fixierstücke des anderen Plattformteils anliegen. Die Fixierstücke sind vorteilhafterweise leistenförmig entlang der Faltlinie erstreckt; auch sie können in vorteilhafter Weise von Strangpressprofilen gebildet sein. Ihre korrekte Montage wird dadurch unterstützt, dass die Fixierstücke für das Flachmaterial über langgestreckte Vorsprünge im Eingriff sind mit dem betreffenden Plattformteil, insbesondere mit einem Gelenkprofil des betreffenden Plattformteils.

Des Weiteren erweist es sich als vorteilhaft, wenn die Fixierstücke für das Flachmaterial im entfalteten Zustand der Plattformteile formschlüssig ineinander greifen und so eine Stützung der Plattformteile in Richtung senkrecht zur Plattformebene ausüben.

Die erfindungsgemäße Anlenkung der Plattformteile aneinander lässt sich auf sehr wirtschaftliche Weise herstellen. Die erwähnten Gelenkprofile sowie die gegebenenfalls vorhandenen Druckleisten und leistenförmigen Druckstücke lassen sich aus Strangpressprofilen, vorzugsweise aus Leichtmetall, insbesondere aus Aluminiumlegierung, herstellen. Es müssen lediglich Öffnungen für Befestigungsmittel, wie z. B. Schrauben, und gegebenenfalls Senklöcher für die Schrauben, angebracht werden. Bei dem bandförmigen Abschnitt des Flachmaterials können ebenfalls Öffnungen in einfacher Weise hergestellt werden. Auch die Montage der Komponenten benötigt weniger Zeit als bei der eingangs genannten bekannten faltbaren Plattform. Die verwandten Komponenten des Gelenks bestehen in vorteilhafter Weise nur aus Aluminiumlegierung und aus dem Flachmaterial; auf die Verwendung von Eisenwerkstoffen kann verzichtet werden, womit auch ein Gewichtsvorteil einhergeht. Gegebenenfalls verwandte Gelenkprofile können aufgrund der gleichmäßigen Kräfteübertragung über die gesamte Länge der Faltlinie grundsätzlich sehr leicht bauen; die Gewichtseinsparung je Plattform kann ohne weiteres 10 % betragen.

Wenn auf die Verwendung von Eisenwerkstoffen verzichtet wird, so erweist sich das Gelenk als absolut korrosionsfrei; es sieht immer sauber und ansprechend aus. Es ist auch denkbar, die metallischen Komponenten des Gelenks zu eloxieren, wodurch ein gewisser Selbstreinigungseffekt erreicht werden kann.

Da bei der erfindungsgemäßen Ausbildung des Gelenks auf Wellen und diese aufnehmende Koppellaschen verzichtet wird, kann Umgebungsschmutz nicht mehr in bewegte Teile eindringen. Das Gelenk muss daher weder aufwendig gereinigt noch aufwendig gepflegt werden. Beispielsweise ist eine regelmäßige Schmierung nicht mehr erforderlich.

Weitere Merkmale, Einzelheiten und Vorteile der Erfindung ergeben sich aus den beigefügten Patentansprüchen und der zeichnerischen Darstellung und nachfolgenden Beschreibung einer bevorzugten Ausführungsform der erfindungsgemäßen faltbaren Plattform. In der Zeichnung zeigt:
- Figur 1: eine teilweise Schnittansicht einer ersten Ausführungsform einer erfindungsgemäßen faltbaren Verbindung von Plattformteilen im entfalteten Zustand (Arbeitsstellung);
- Figur 2: eine Figur 1 entsprechende Ansicht der faltbaren Verbindung im zusammengefalteten Zustand (Fahrstellung);
- Figur 3: eine teilweise Ansicht einer anderen Ausführungsform der faltbaren Verbindung von Plattformteilen im entfalteten Zustand (Arbeitsstellung);
- Figur 4: eine Figur 3 entsprechende Ansicht der faltbaren Verbindung im zusammengefalteten Zustand (Fahrstellung);
- Figur 5a: eine weitere teilweise Ansicht einer faltbaren Verbindung von Plattformteilen nach einer weiteren Ausführungsform der Erfindung;
- Figur 5b: eine alternative Ausführung des Widerlagers in Figur 5a und
- Figur 6: eine Figur 5 entsprechende Ansicht der faltbaren Verbindung im zusammengefalteten Zustand (Fahrstellung).

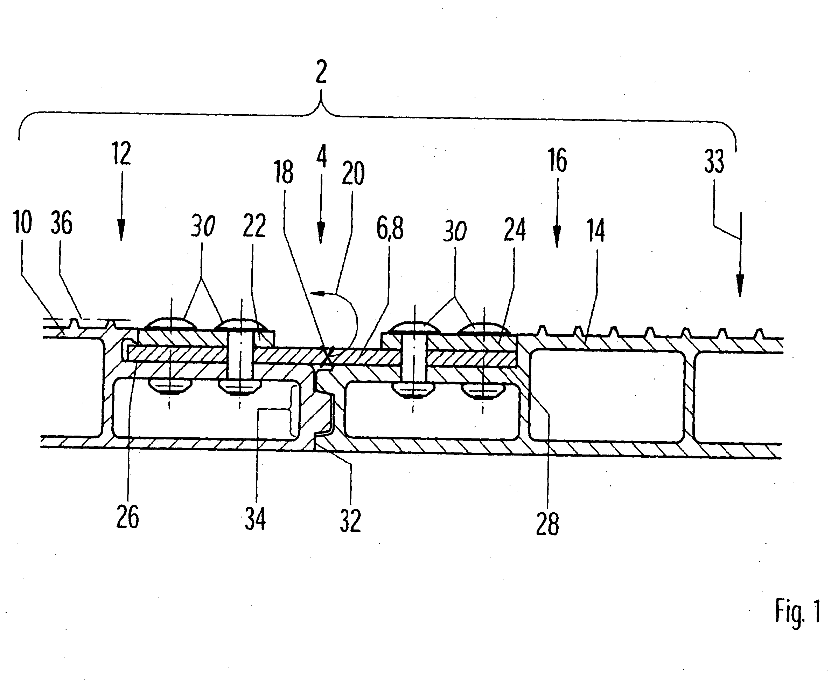

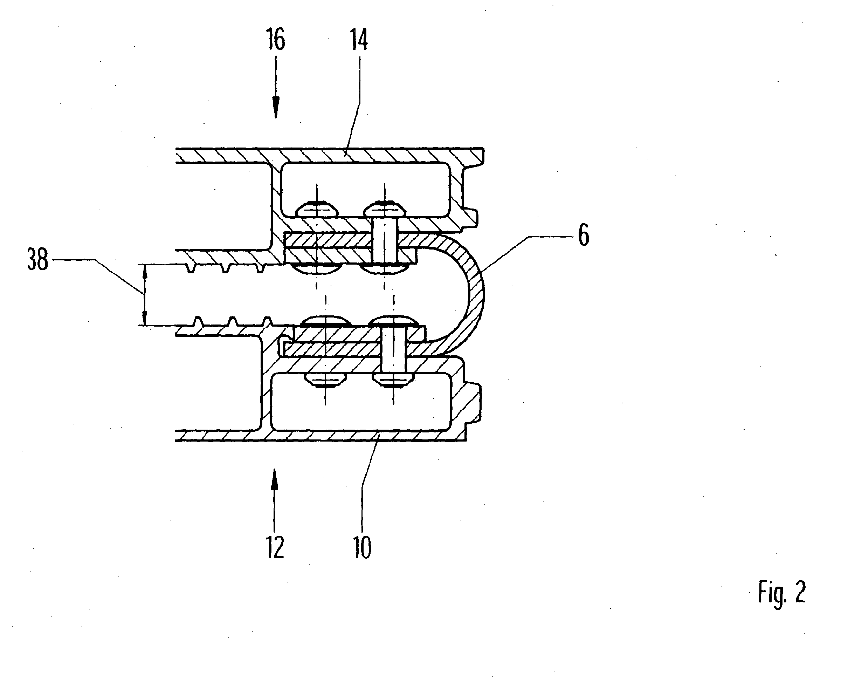

Figuren 1 und 2 zeigen den Gelenkbereich einer ersten Ausführungsform einer faltbaren Plattform 2. Ein insgesamt mit dem Bezugszeichen 4 bezeichnetes Gelenk umfasst einen bandförmigen einstückigen Abschnitt 6 eines Flachmaterials 8 aus einem biegsamen Werkstoff, beispielsweise aus einem faserverstärkten Flachriemenwerkstoff.

Der bandförmige Abschnitt 6 ist auf noch näher zu beschreibende Weise flächenhaft mit einem Gelenkprofil 10 eines ersten beispielsweise feststehenden Plattformteils 12 und mit einem Gelenkprofil 14 eines zweiten bezüglich dem ersten faltbaren Plattformteils 16 verbunden. Das Plattformteil 16 lässt sich um eine Faltlinie 18, die sich senkrecht zur Zeichnungsebene erstreckt, in Richtung des Pfeils 20 auf das feststehende Plattformteil 12 in die in Figur 2 dargestellte gefaltete Position (Fahrposition) falten.

Zur Befestigung des bandförmigen Abschnitts 6 an dem einen bzw. anderen Gelenkprofil 10 bzw. 14 sind in Richtung der Faltlinie 18 erstreckte Druckleisten 22 bzw. 24 vorgesehen, die unter Zwischenordnung des bandförmigen Abschnitts 6 gegen je einen von der Oberfläche des Gelenkprofils 10, 14 geringfügig zurückgesetzten Bereich 26 bzw. 28 der Gelenkprofile 10, 14 durch mehrere in Figuren 1 und 2 nur angedeutete Nieten 30 (oder alternativ Schrauben) festgezogen sind. Im dargestellten Fall verlaufen die Oberseiten der Druckleisten 22, 24 im Wesentlichen flächenbündig zur Oberfläche der Gelenkprofile 10, 14, die ihrerseits einen Teil der begehbaren Plattformoberseite bilden.

In der in Figur 1 dargestellten Arbeitsstellung liegen die Gelenkprofile 10, 14 unterhalb der Faltlinie 18 vorzugsweise über die gesamte Erstreckung der Faltlinie 18 gegeneinander an und bilden dort ein festes Widerlager 32. Über den bandförmigen Abschnitt 6 werden bei in Richtung des Pfeils 33 wirkender Belastung des faltbaren Plattformteils 16 Zugkräfte auf das feststehende Plattformteil 12 übertragen, und über das feste Widerlager 32 werden Druckkräfte von dem faltbaren Plattformteil 16 auf das feststehende Plattformteil 12 übertragen. Je größer der Abstand zwischen Faltlinie 18 und festem Widerlager 32 ist, desto geringer sind die Zugkräfte auf das Flachmaterial und die resultierenden über das Widerlager 32 auf das feststehende Plattformteil 12 eingeleiteten Druckkräfte.

Zwischen dem festen Widerlager 32 und der Faltlinie 18 greifen die gegeneinander anliegenden Gelenkprofile 10, 14 nut- und federartig ineinander. Durch diesen Eingriff 34 zwischen faltbarem Plattformteil 16 und feststehendem Plattformteil 12 wird das faltbare Plattformteil 16 senkrecht zur Plattformoberfläche 36 über die gesamte Länge der Faltlinie 18 gestützt und gehalten. Auf diese Weise wird erreicht, dass der bandförmige Abschnitt 6 in der Arbeitsstellung lediglich auf Zug beansprucht wird, jedoch nicht zusätzlich gegen vertikale Scherkräfte das faltbare Plattformteil 16 stützt. Dies geschieht, wie erwähnt, über den Eingriff 34 der Gelenkprofile 10, 14 ineinander.

Im Anschluss an die Gelenkprofile 10, 14 können sich beispielsweise parallel hierzu oder auch senkrecht hierzu verlaufende Profile, insbesondere Hohlfachprofile, zur Bildung der nicht dargestellten Bereiche des feststehenden Plattformteils 12 und des faltbaren Plattformteils 16 erstrecken. Es könnte auch eine andere Konstruktion, beispielsweise mit angeschweißten Blechteilen, verwendet werden. Bei den Druckleisten 22, 24 kann es sich im beispielhaft dargestellten Fall um separate Aluminium-Strangpressprofile oder Stahl- oder Edelstahlleisten handeln; sie könnten aber auch einstückig mit dem jeweiligen Gelenkprofil 10, 14 ausgebildet sein.

Wie man Figur 2 entnimmt, haben die Plattformteile 12, 16 im zusammengefalteten Zustand (Fahrstellung) einen Abstand 38, in welchen nicht dargestellte Randabschlussprofile, Fußschalter und dergleichen einragen können.

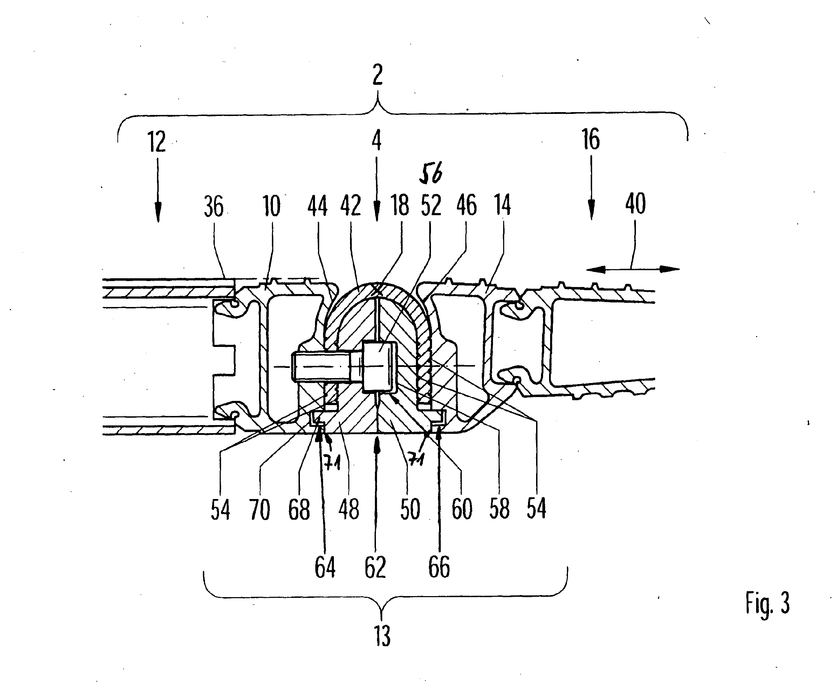

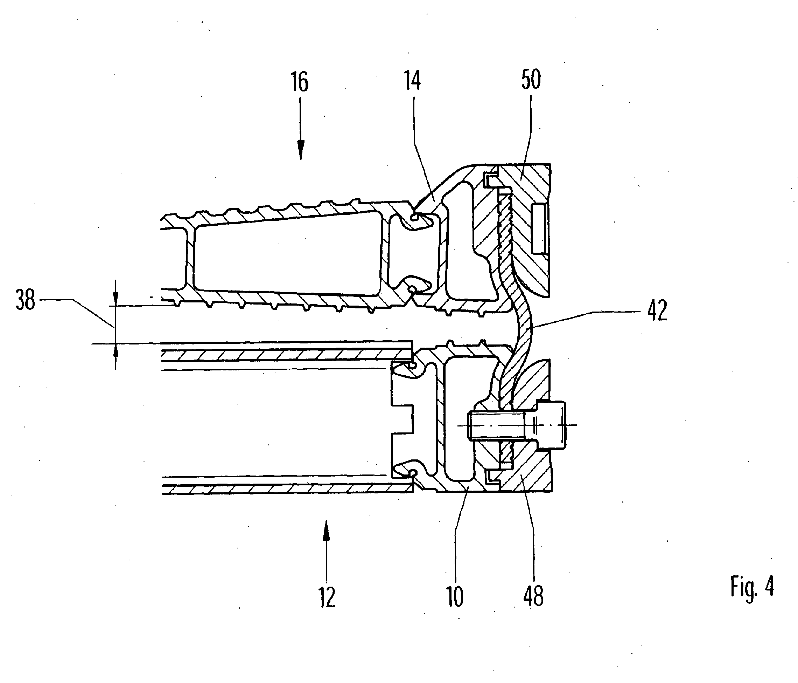

Die Figuren 3 und 4 zeigen den Bereich eines Gelenks 4 zwischen zwei Plattformteilen 12, 16, wobei hier das Plattformteil 16 in einer Längsrichtung 40 sehr kurz baut, beispielsweise nur 300 bis 350 mm lang. Es handelt sich hier um ein sogenanntes Spitzenprofil der Plattform 2. In diesem Fall bildet das Plattformteil 16 das faltbare Plattformteil und das Plattformteil 12 wird als feststehendes Plattformteil bezeichnet (obschon es seinerseits um ein weiteres nicht dargestelltes Gelenk in der Figur 3 links auf ein drittes Plattformteil faltbar sein kann). Wiederum sind Gelenkprofile 10, 14 vorgesehen. Im Unterschied zum Ausführungsbeispiel nach Figuren 1 und 2 ist ein bandförmiger Abschnitt 42 nicht an eine Plattformoberfläche 36, sondern an eine jeweilige Stirnseite 44, 46 der Gelenkprofile 10, 14 angefügt. Dies ist dadurch erreicht, dass leistenförmige Fixierstücke 48, 50, bei denen es sich vorteilhafterweise um stranggepresste Leichtmetallprofile handelt, jeweils unter Zwischenordnung des bandförmigen Abschnitts 42 gegen eine jeweilige Stirnseite 44, 46 der Gelenkprofile 10, 14 festgezogen sind. Vorzugsweise weisen die Stirnseiten 44, 46 und vorzugsweise auch die Fixierstücke 48, 50 gegen den bandförmigen Abschnitt 42 vorstehende Klemmelemente 54 auf. Diese Klemmelemente 54 sind vorzugsweise spitz auslaufend und greifen unter Druck in den bandförmigen Abschnitt 42 des Flachmaterials ein. Hierdurch wird der bandförmige Abschnitt für eine hohe Zugbeanspruchung zwischen den Gelenkprofilen 10, 14 und den Fixierstücken 48, 50 fixiert, so dass er nicht herausrutschen kann.

In der Darstellung der Figur 3 ist mittels der Schraube 52 das Fixierstück 48 gegen die Stirnseite 44 des Gelenkprofils 10 festgezogen. Senkrecht zur Zeichnungsebene und dahinter (und daher nicht dargestellt) findet sich eine spiegelbildliche Anordnung, mittels derer das Fixierstück 50 gegen die Stirnseite 46 des Gelenkprofils 14 festgezogen ist. Für einen jeweiligen Schraubenkopf 56 befindet sich in dem jeweils anderen Fixierstück eine Ausnehmung 58. Wiederum wird auf diese Weise ein Eingriff 60 von Komponenten des einen Plattformteils 12 in Komponenten des anderen Plattformteils 16 erreicht, vermittels derer in vertikaler Richtung, also senkrecht zur Plattformoberfläche 36, eine Stützung des ausgefalteten Plattformteils 16 gegenüber dem feststehenden Plattformteil 12 erreicht wird. Die Druckkräfte werden wiederum über ein festes Widerlager 62 übertragen, welches in maximaler Entfernung unterhalb der Faltlinie 18 angeordnet und von gegeneinander anliegenden Bereichen der Fixierstücke 48, 50 gebildet ist.

Man erkennt bei der Ausführungsform nach Figuren 3, 4, dass der bandförmige Abschnitt 42 zur Übertragung der Zugkräfte in der Arbeitsstellung um 180° gebogen ist (während er bei der Ausführungsform nach Figuren 1, 2 in der Arbeitsstellung eben erstreckt ist (0°-Anordnung). Aufgrund der geringen Erstreckung des faltbaren Plattformteils 16 in Längsrichtung 40 (geringer Lastabstand zur Faltlinie 18), sind die im Gelenk wirkenden Kräfte entsprechend geringer, so dass die 180°-Anordnung sich als ebenso zweckmäßig verwendbar erweist.

Man erkennt ferner, dass die leistenförmigen Fixierstücke 48, 50 vorzugsweise über die gesamte Länge der Faltlinie 18 formschlüssig in Eingriff sind mit den Gelenkprofilen 10, 14. Dieser wiederum nut- und federartige Eingriff 64, 66 ist so ausgebildet, dass ein jeweiliger langgestreckter Vorsprung 68 (z. B. Feder) mehr oder weniger tief in eine entsprechend geformte Ausnehmung 70 des anderen Teils eingreifen kann, so dass die entstehenden Druckkräfte, die bei dem festen Widerlager 62 übertragen werden, in eine noch weitergehende Klemmung des bandförmigen Abschnitts 42 gehen. Die Tiefe des Eingriffs 64 bzw. 66 ist jedoch durch ein festes Widerlager 71 zwischen dem jeweiligen Fixierstück 48, 50 und dem Gelenkprofil 10, 14 begrenzt, damit das Flachmaterial nicht zerquetscht wird.

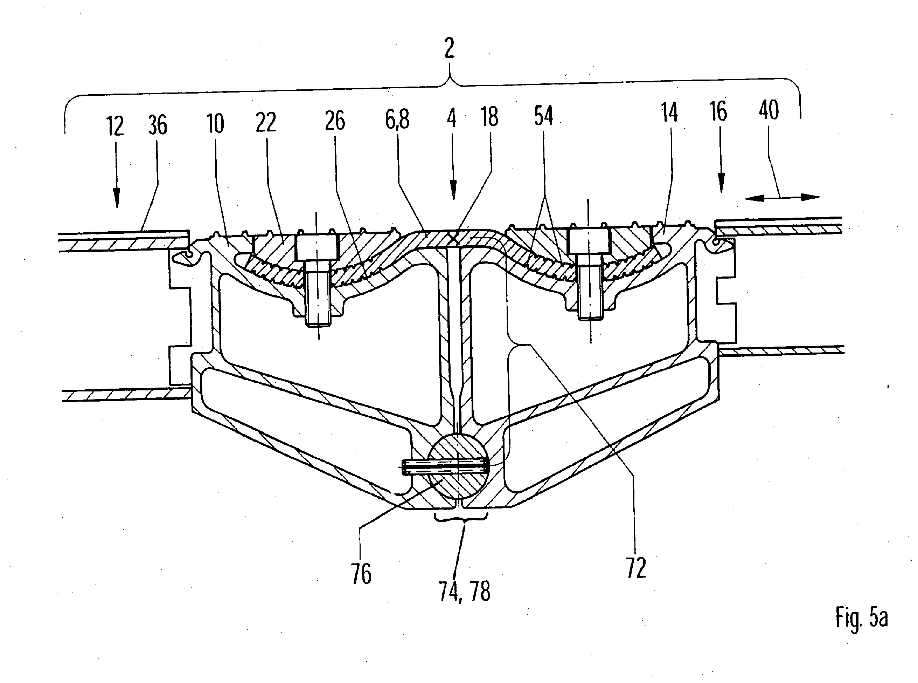

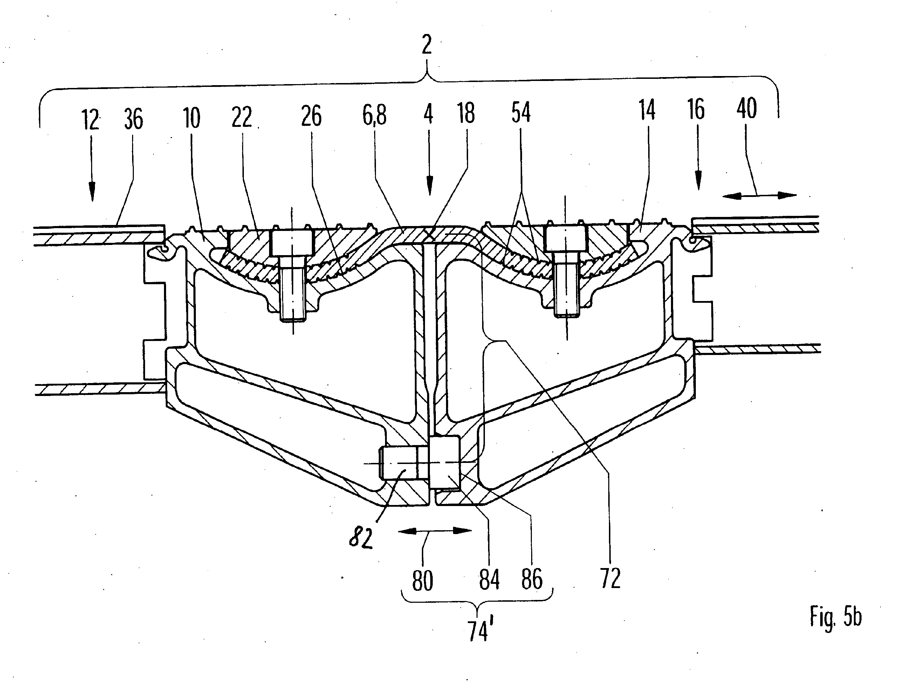

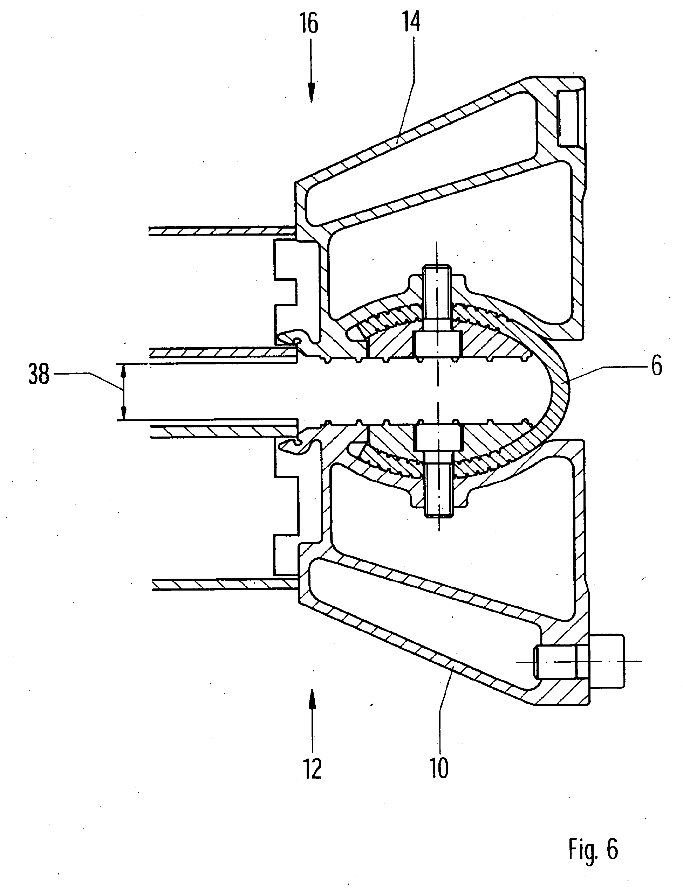

Figuren 5a, 5b und 6 zeigen eine Ausführungsform eines Gelenks 4 für hochbelastbaren Einsatz. Hier kann das faltbare Plattformteil 16 in Längsrichtung 40 sogar größer sein als das feststehende Plattformteil 12. Hier liegt ein bandförmiger Abschnitt 6 aus geeignetem Flachmaterial 8 im Bereich der Faltlinie 18 auf Höhe der Plattformoberfläche 36. Ein jeweiliges Gelenkprofil 10, 14 ist keil- oder trapezförmig ausgebildet und erweitert sich in Richtung auf die vertikale, die Faltlinie 18 einschließende Ebene. Auf diese Weise kann ein maximaler Abstand 72 zwischen einem Widerlager 74 zur Einleitung der Druckkräfte und der Faltlinie 18 erreicht werden. Beispielsweise sind hier Abstände von vorzugsweise 70 bis 90 mm denkbar und vorteilhaft. Ein den bandförmigen Abschnitt 6 klemmender Bereich 26 der Gelenkprofile 10, 14 ist muldenförmig ausgeführt, so dass der bandförmige Abschnitt 6 in der in Figur 5a dargestellten Arbeitsstellung nicht in einer Ebene erstreckt ist, sondern bogenförmig gekrümmt ist. Insgesamt entsteht eine wellenförmige Anordnung des bandförmigen Abschnitts 6. Diese Anordnung und Befestigung des bandförmigen Abschnitts 6 hat den Vorteil, dass er im Bereich der Faltlinie 18 auf Höhe der Plattformoberfläche 36 liegt, und andererseits entsteht durch die wellenförmige Anordnung eine zusätzliche natürliche Reibung zwischen dem muldenförmigen Bereich 26 bzw. einer entsprechend komplementär ausgebildeten Druckleiste 22 und dem bandförmigen Abschnitt 6. Wiederum sind Klemmelemente 54 vorgesehen, die sich in das Flachmaterial eingraben können, wodurch eine hohe Beanspruchbarkeit des Flachmaterials auf Zug realisiert wird. Weiter hat die wellenförmige Anordnung des bandförmigen Abschnitts 6 im Hinblick auf eine gleichmäßige Beanspruchung des gesamten Querschnitts einen natürlichen Ausgleich (Seiltheorie).

Das bereits erwähnte Widerlager 74 zur Übertragung der Druckkräfte ist als Festlager ausgebildet und umfasst einen in Richtung der Faltlinie 18 erstreckten Stab 76, der zugleich einen formschlüssigen Eingriff 78 bildet, der zur Stützung des faltbaren Plattformteils 16 in Richtung senkrecht zur Plattformoberfläche 36 führt.

Figur 5b zeigt eine andere alternative Ausführungsform des Widerlagers zur Übertragung der Druckkräfte. Dieses Widerlager 74' ist in Richtung 80 der Druckkräfte verstellbar ausgebildet. Es umfasst eine Schraube 82 (z. B. Innensechskant), die mit ihrem Schraubenkopf 84 axial gegen den Boden einer Ausnehmung 86 in dem gegenüberliegenden Gelenkprofil 14 anliegt. Das Widerlager 74' ist zum Beispiel dadurch verstellbar, dass unter den Schraubenkopf 84 nicht dargestellte Unterlags- oder Distanzscheiben einlegbar sind.

Bei sämtlichen Ausführungsformen hat es sich als vorteilhaft erwiesen, dass der bandförmige Abschnitt 6, 42 im Bereich der Befestigungselemente (z. B. Schrauben) etwas größere Öffnungen als der Durchmesser der Befestigungselemente aufweist.

Bei den Ausführungsformen nach Figuren 1 bis 4 kann eine Vorspannung zwischen feststehendem Plattformteil und faltbarem Plattformteil dadurch erzielt werden, dass bei der Fixierung des bandförmigen Abschnitts die Plattformteile nicht in 0°-Anordnung (Figuren 1, 4) bzw. 180°-Anordnung (Figuren 2, 3) angeordnet sind, sondern beispielsweise 4 bis 5° abweichend hiervon. Nach der Montage hat das Gelenk dann überwiegend die richtige Vorspannung. Bei dem hochbelasteten Gelenk nach Figuren 5 und 6 kann ebenso verfahren werden. Es ist aber bei der Ausführungsform nach Figur 5b möglich, z. B. nach einer schwerwiegenden Überlastung des Gelenks 4, das variable Widerlager 74' so nachzustellen, dass das Gelenk wieder die richtige Vorspannung hat.

## Patentansprüche

1. Hubladebühne für ein Nutzfahrzeug, mit einer faltbaren heb- und senkbaren Plattform (2) mit einem eine Faltlinie (18) bildenden Gelenk (4) zwischen gegeneinander und aufeinander faltbaren Plattformteilen (12, 16), wobei die Plattformteile (12, 16) im entfalteten Zustand unterhalb der Faltlinie (18) gegeneinander anliegen, so dass in einem Anlagebereich ein Widerlager (32, 62, 74, 74') gebildet ist, an dem Druckkräfte übertragen werden, **dadurch gekennzeichnet, dass** das Gelenk (4) einen bandförmigen Abschnitt (6, 42) eines Flachmaterials (8) aus einem biegsamen Werkstoff umfasst, welcher einerseits an dem einen Plattformteil (12) und andererseits an dem anderen Plattformteil (16) durch Klemmung festgelegt ist, und dass im entfalteten Zustand auftretende Zugkräfte zwischen den Plattformteilen (12, 16) über den bandförmigen Abschnitt (6, 42) aus Flachmaterial übertragen werden.

2. Hubladebühne nach Anspruch 1, **dadurch gekennzeichnet, dass** der bandförmige Abschnitt (6, 42) von einem langfaserarmierten Band, insbesondere Gummi-oder Kunststoffband, gebildet ist.

3. Hubladebühne nach Anspruch 1 oder 2, **dadurch gekennzeichnet, dass** sich ein bandförmiger Abschnitt (6, 42) des Flachmaterials (8) über im wesentlichen die gesamte Längserstreckung einer Faltlinie (18) zwischen den gegeneinander faltbaren Plattformteilen (12, 16) erstreckt.

4. Hubladebühne nach Anspruch 1, 2 oder 3, **dadurch gekennzeichnet, dass** der bandförmige Abschnitt (6, 42) des Flachmaterials (8) mit den Plattformteilen (12, 16) durch Klemmung verbunden ist.

5. Hubladebühne nach Anspruch 4, **dadurch gekennzeichnet, dass** die Klemmung durch Verstemmung, Verschraubung oder Vernietung unterstützt ist.

6. Hubladebühne nach einem oder mehreren der vorstehenden Ansprüche, **dadurch gekennzeichnet, dass** der bandförmige Abschnitt (6) des Flachmaterials (8) im Bereich der Verbindung mit einem Plattformteil (12, 16) oder mit beiden Plattformteilen wellenförmig oder sickenförmig verlaufend geformt ist.

7. Hubladebühne nach einem oder mehreren der vorstehenden Ansprüche, **dadurch gekennzeichnet, dass** den bandförmigen Abschnitt (6, 42) des Flachmaterials (8) haltende Bereiche (26, 28) des Plattformteils (12, 16) oder Gelenks (4) mit in Richtung auf das Flachmaterial vorspringenden Klemmelementen (54) ausgebildet sind.

8. Hubladebühne nach einem oder mehreren der vorstehenden Ansprüche, **dadurch gekennzeichnet, dass** den bandförmigen Abschnitt (6) des Flachmaterials (8) haltende Bereiche (26, 28) des Plattformteils mit gekrümmter, insbesondere mulden- oder rinnenförmiger Oberfläche ausgebildet sind.

9. Hubladebühne nach einem oder mehreren der vorstehenden Ansprüche, **dadurch gekennzeichnet, dass** der bandförmige Abschnitt (6) mittels einer Druckleiste (22, 24) gegen das Plattformteil (12, 16) gehalten ist.

10. Hubladebühne nach einem oder mehreren der vorstehenden Ansprüche, **dadurch gekennzeichnet, dass** der bandförmige Abschnitt (6, 42) wenigstens nahezu an einer Oberfläche (36) der Plattformteile (12, 16) angeordnet ist.

11. Hubladebühne nach einem oder mehreren der vorstehenden Ansprüche, **dadurch gekennzeichnet, dass** ein Plattformteil (12, 16) ein entlang der Faltlinie (18) verlaufendes leistenförmiges Gelenkprofil (10, 14) aufweist, gegen welches der bandförmige Abschnitt (6, 42) gehalten ist.

12. Hubladebühne nach Anspruch 11, **dadurch gekennzeichnet, dass** das Gelenkprofil (10, 14) im Querschnitt und in Richtung der Faltlinie (18) betrachtet trapez- oder keilförmig ausgebildet ist, wobei sich die Keil- oder Trapezform in Richtung auf die Faltlinie (18) erweitert.

13. Hubladebühne nach einem oder mehreren der vorstehenden Ansprüche, **dadurch gekennzeichnet, dass** die Plattformteile (12, 16) im entfalteten Zustand unterhalb der Faltlinie (18) formschlüssig ineinandergreifen, insbesondere nut-und-federartig ineinandergreifen.

14. Hubladebühne nach einem oder mehreren der vorstehenden Ansprüche, **dadurch gekennzeichnet, dass** ein Widerlager (74') zwischen den Plattformteilen (12, 16) im entfalteten Zustand der Plattformteile in Richtung senkrecht zur Oberfläche (36) der Plattformteile wenigstens 50 mm, insbesondere 50 - 100 mm, insbesondere 70 - 90 mm von der Faltlinie (18) der Plattformteile beabstandet ist.

15. Hubladebühne nach einem oder mehreren der vorstehenden Ansprüche, **dadurch gekennzeichnet, dass** ein Widerlager (74') zwischen den Plattformteilen (12, 16) in Richtung der Druckkräfte verstellbar ist.

16. Hubladebühne nach Anspruch 15, **dadurch gekennzeichnet, dass** das Widerlager (74') von einer Schraube (82) oder einem Schraubenkopf (84) gebildet ist.

17. Hubladebühne nach einem oder mehreren der vorstehenden Ansprüche, **dadurch gekennzeichnet, dass** das Flachmaterial (42) in einer Ebene parallel zur Oberfläche (36) der Plattformteile (12, 16) gegen die Plattformteile (12, 16) anliegt.

18. Hubladebühne nach einem oder mehreren der vorstehenden Ansprüche 1 - 17, **dadurch gekennzeichnet, dass** das Flachmaterial (42) in einer Ebene im wesentlichen senkrecht zur Oberfläche (36) der Plattformteile (12, 16) gegen eine Stirnseite (44, 46) der Plattformteile (12, 16) anliegt.

19. Hubladebühne nach Anspruch 18, **dadurch gekennzeichnet, dass** im entfalteten Zustand der Plattformteile (12, 16) Fixierstücke (48) für das Flachmaterial am einen Plattformteil (12) mittelbar oder unmittelbar gegen Fixierstücke (50) für das Flachmaterial am anderen Plattformteil (16) anliegen.

20. Hubladebühne nach Anspruch 18 oder 19, **dadurch gekennzeichnet, dass** Fixierstücke (48, 50) für das Flachmaterial über langgestreckte Vorsprünge im Eingriff sind mit dem betreffenden Plattformteil (12, 16), insbesondere mit einem Gelenkprofil (10, 14) des Plattformteils (12, 16).

21. Hubladebühne nach Anspruch 18, 19 oder 20, **dadurch gekennzeichnet, dass** die Fixierstücke (48, 50) für das Flachmaterial im entfalteten Zustand der Plattformteile (12, 16) formschlüssig ineinandergreifen und so eine Stützung des faltbaren Plattformteils (16) in Richtung senkrecht zur Plattformoberfläche (36) bewirken.

## Claims

1. An elevating lift gate for a commercial vehicle, having a foldable platform (2), which can be raised and lowered and has a hinge (4), constituting a fold line (18), between platform elements (12, 16) which can be folded against and on top of each other, wherein in the unfolded state the platform elements (12, 16) rest against each other below the fold line (18), so that an abutment (32, 62, 74, 74') is formed in a contact area, on which pressure forces are transmitted, **characterized in that** the hinge (4) includes a tape-shaped section (6, 42) of a flat material (8) made of a flexible material, which on one end is fixed in place on the one platform element (12) and on the other end on the other platform element (16) by clamping, and that traction forces occurring in the unfolded state between the platform elements are transmitted via the tape-shaped section (6, 42) of flat material.

2. The elevating lift gate in accordance with claim 1, **characterized in that** the tape-shaped section (6, 42) is constituted by a long-fibered armored tape, in particular a rubber or plastic tape.

3. The elevating lift gate in accordance with claim 1 or 2, **characterized in that** a tape-shaped section (6, 42) of the flat material (8) substantially extends over the entire linear extent of a fold line (18) between the platform elements (12, 16) which can be folded against each other.

4. The elevating lift gate in accordance with claim 1, 2 or 3 **characterized in that** the tape-shaped section (6, 42) of flat material (8) is connected with the platform elements (12, 16) by being clamped.

5. The elevating lift gate in accordance with claim 4, **characterized in that** clamping is aided by wedging, screwing or riveting.

6. The elevating lift gate in accordance with one or several of the preceding claims, **characterized in that** in the area of connection with one platform element (12, 16), or with both platform elements, the tape-shaped section (6) of the flat material (8) is shaped to extent wave-like or in the shape of beads.

7. The elevating lift gate in accordance with one or several of the preceding claims, **characterized in that** areas (26, 28) supporting the tape-shaped section (6, 42) of the flat material (8) of the platform element (12, 16) or the hinge (4) are embodied with clamping elements (54) protruding in the direction toward the flat material.

8. The elevating lift gate in accordance with one or several of the preceding claims, **characterized in that** areas (26, 28) supporting the tape-shaped section (6) of the flat material (8) of the platform element are embodied with curved, in particular trough- or groove-shaped surfaces.

9. The elevating lift gate in accordance with one or several of the preceding claims, **characterized in that** the tape- shaped section (6) is held against the platform element (12, 16) by means of a pressure strip (22, 24).

10. The elevating lift gate in accordance with one or several of the preceding claims, **characterized in that** the tape- shaped section (6, 42) is arranged at least approximately on a surface (36) of the platform elements (12, 16).

11. The elevating lift gate in accordance with one or several of the preceding claims, **characterized in that** one platform element (12, 16) has a hinge profile (10, 14) extending along the fold line (18), against which the tape-shaped section (6, 42) is held.

12. The elevating lift gate in accordance with claim 11, **characterized in that**, viewed in cross section and in the direction of the fold line (18), the hinge profile (10, 14) is embodied in a trapeze or wedge shape, wherein the wedge or trapeze shape widens in the direction toward the fold line (18).

13. The elevating lift gate in accordance with one or several of the preceding claims, **characterized in that** in the unfolded state the platform elements (12, 16) positively interlock with each other, in particular in a tongue-and-groove manner.

14. The elevating lift gate in accordance with one or several of the preceding claims, **characterized in that**, in the unfolded state of the platform elements, an abutment (74') between the platform elements (12, 16) is spaced apart from the fold line (18) of the platform element in the direction perpendicularly in respect to the surface (36) of the platform elements by at least 50 mm, in particular 50 to 100 mm, in particular 70 to 90 mm.

15. The elevating lift gate in accordance with one or several of the preceding claims, **characterized in that** an abutment (74') between the platform elements (12, 16) can be shifted in the direction of the pressure forces.

16. The elevating lift gate in accordance with claim 15, **characterized in that** the abutment (74') is constituted by a screw (82) or a screw head (84).

17. The elevating lift gate in accordance with one or several of the preceding claims, **characterized in that** the flat material (42) rests against the platform elements (12, 16) in a plane parallel with the surface (36) of the platform elements (12, 16).

18. The elevating lift gate in accordance with one or several of the preceding claims 1 - 17, **characterized in that** the flat material (42) rests against a front face (44, 46) of the platform elements (12, 16) in a plane substantially parallel with the surface (36) of the platform elements (12, 16).

19. The elevating lift gate in accordance with claim 18, **characterized in that** in the unfolded state of the platform elements (12, 16) fixation pieces (48) for the flat material on one platform element (12) rest indirectly or directly against fixation pieces (50) for the flat material on the other platform element (16).

20. The elevating lift gate in accordance with claim 18 or 19, **characterized in that** fixation pieces (48, 50) for the flat material are in engagement via elongated protrusions with the respective platform element (12, 16), in particular with a hinge profile (10, 14) of the platform element (12, 16).

21. The elevating lift gate in accordance with claim 18, 19 or 20, **characterized in that** in the unfolded state of the platform elements (12, 16) fixation pieces (48, 50) for the flat material are in positive engagement with each other and in this way provide a support of the foldable platform element (16) in a direction perpendicular to the platform surface (36).

## Revendications

1. Hayon élévateur de chargement pour un véhicule utilitaire, comprenant une plateforme repliable (2) qui peut être soulevée et abaissée et présente une articulation (4) formant une ligne de pliage (18) entre des parties de plateforme (12, 16) pouvant être pliées l'une par rapport à l'autre et l'une sur l'autre, les parties de plateforme (12, 16) s'appuyant mutuellement l'une contre l'autre sous la ligne de pliage (18) dans l'état déplié, de sorte que dans une zone d'appui est formée une butée d'appui (32, 62, 74, 74') au niveau de laquelle sont transmises des forces de compression,
**caractérisé en ce que** l'articulation (4) comprend un tronçon en forme de bande (6, 42) d'un matériau plat (8) constitué d'une matière flexible, qui est fixé par serrage d'une part à une partie de plateforme (12) et d'autre part à l'autre partie de plateforme (16), et **en ce que** des forces de traction apparaissant dans l'état déplié entre les parties de plateforme (12, 16) sont transmises par l'intermédiaire du tronçon en forme de bande (6, 42) constitué du matériau plat.

2. Hayon élévateur de chargement selon la revendication 1, **caractérisé en ce que** le tronçon en forme de bande (6, 42) est formé par une bande armée de fibres longues, notamment par une bande de caoutchouc ou de matière plastique.

3. Hayon élévateur de chargement selon la revendication 1 ou la revendication 2, **caractérisé en ce qu'**un tronçon en forme de bande (6, 42) du matériau plat (8) s'étend sensiblement sur la totalité de l'étendue en longueur d'une ligne de pliage (18) entre les parties de plateforme (12, 16) pouvant être repliées l'une par rapport à l'autre.

4. Hayon élévateur de chargement selon les revendications 1, 2 ou 3, **caractérisé en ce que** le tronçon en forme de bande (6, 42) du matériau plat (8) est relié aux parties de plateforme (12, 16), par serrage.

5. Hayon élévateur de chargement selon la revendication 4, **caractérisé en ce que** le serrage est conféré par sertissage, vissage ou rivetage.

6. Hayon élévateur de chargement selon l'une ou plusieurs des revendications précédentes, **caractérisé en ce que** le tronçon en forme de bande (6) du matériau plat (8) est réalisé de manière à s'étendre sous une forme ondulée ou sous une forme de moulure, dans la zone de liaison avec une partie de plateforme (12, 16) ou avec les deux parties de plate-forme.

7. Hayon élévateur de chargement selon l'une ou plusieurs des revendications précédentes, **caractérisé en ce que** des zones (26, 28) de la partie de plateforme (12, 16) ou de l'articulation (4), qui maintiennent le tronçon en forme de bande (6, 42) du matériau plat (8), sont réalisées avec des éléments de serrage (54) en saillie en direction du matériau plat.

8. Hayon élévateur de chargement selon l'une ou plusieurs des revendications précédentes, **caractérisé en ce que** des zones (26, 28) de la partie de plateforme, qui maintiennent le tronçon en forme de bande (6) du matériau plat (8), sont réalisées de manière à présenter une surface courbée, en particulier une surface en forme de cavité ou de goulotte.

9. Hayon élévateur de chargement selon l'une ou plusieurs des revendications précédentes, **caractérisé en ce que** le tronçon en forme de bande (6) est maintenu et fixé contre la partie de plateforme (12, 16), au moyen d'une barrette de compression (22, 24).

10. Hayon élévateur de chargement selon l'une ou plusieurs des revendications précédentes, **caractérisé en ce que** le tronçon en forme de bande (6, 42) est agencé au moins approximativement au niveau d'une surface supérieure (36) des parties de plateforme (12, 16).

11. Hayon élévateur de chargement selon l'une ou plusieurs des revendications précédentes, **caractérisé en ce qu'**une partie de plateforme (12, 16) comporte un profilé d'articulation (10, 14) en forme de barre, qui s'étend le long de la ligne de pliage (18), et contre lequel est maintenu et fixé le tronçon en forme de bande (6, 42).

12. Hayon élévateur de chargement selon la revendication 11, **caractérisé en ce que** le profilé d'articulation (10, 14) présente, en section transversale et observé dans la direction de la ligne de pliage (18), une configuration en forme de trapèze ou en forme de coin, la forme en coin ou en trapèze s'élargissant en direction de la ligne de pliage (18).

13. Hayon élévateur de chargement selon l'une ou plusieurs des revendications précédentes, **caractérisé en ce que** dans l'état déplié, les parties de plateforme (12, 16) s'engagent l'une dans l'autre par complémentarité de formes, sous la ligne de pliage (18), notamment à la manière d'une liaison par rainure et languette.

14. Hayon élévateur de chargement selon l'une ou plusieurs des revendications précédentes, **caractérisé en ce que** dans l'état déplié des parties de plateforme, une butée d'appui (74') entre les parties de plateforme (12, 16) est située, dans une direction perpendiculaire à la surface supérieure (36) des parties de plateforme, à une distance d'au moins 50 mm, notamment de 50-100 mm, et plus particulièrement de 70-90 mm de la ligne de pliage (18) des parties de plateforme.

15. Hayon élévateur de chargement selon l'une ou plusieurs des revendications précédentes, **caractérisé en ce qu'**une butée d'appui (74') entre les parties de plateforme (12, 16), peut être réglée dans la direction des forces de compression.

16. Hayon élévateur de chargement selon la revendication 15, **caractérisé en ce que** la butée d'appui (74') est formée par une vis (82) ou une tête de vis (84).

17. Hayon élévateur de chargement selon l'une ou plusieurs des revendications précédentes, **caractérisé en ce que** le matériau plat (42) s'appuie contre les parties de plateforme (12, 16) dans un plan parallèle à la surface supérieure (36) des parties de plateforme (12, 16).

18. Hayon élévateur de chargement selon l'une ou plusieurs des revendications précédentes 1 - 17, **caractérisé en ce que** le matériau plat (42) s'appuie dans un plan sensiblement perpendiculaire à la surface supérieure (36) des parties de plateforme (12, 16), contre une face frontale (44, 46) des parties de plateforme (12, 16).

19. Hayon élévateur de chargement selon la revendication 18, **caractérisé en ce que** dans l'état déplié des parties de plateforme (12, 16), des pièces de fixation (48) pour le matériau plat sur une partie de plateforme (12), s'appuient indirectement ou directement contre des pièces de fixation (50) pour le matériau plat sur l'autre partie de plateforme (16).

20. Hayon élévateur de chargement selon la revendication 18 ou la revendication 19, **caractérisé en ce que** des pièces de fixation (48, 50) pour le matériau plat sont en prise réciproque avec la partie de plateforme (12, 16) considérée, notamment avec un profilé d'articulation (10, 14) de la partie de plateforme (12, 16), par l'intermédiaire de protubérances allongées.

21. Hayon élévateur de chargement selon les revendications 18, 19 ou 20, **caractérisé en ce que** dans l'état déplié des parties de plateforme (12, 16), les pièces de fixation (48, 50) pour le matériau plat s'engagent l'une dans l'autre en réalisant ainsi un soutien de la partie de plateforme (16) repliable, dans la direction perpendiculaire à la surface supérieure (36) de la plateforme.
